(19) Europäisches Patentamt
European Patent Office
Office européen des brevets

(11) **EP 3 157 255 A1**

(12) **EUROPEAN PATENT APPLICATION**

(43) Date of publication:
**19.04.2017 Bulletin 2017/16**

(51) Int Cl.:
***H04N 17/00*** *(2006.01)*

(21) Application number: **16465512.8**

(22) Date of filing: **01.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Continental Automotive GmbH
30165 Hannover (DE)**

(72) Inventor: **Botusescu, Adrian
300584 Timisoara (RO)**

(74) Representative: **Reuter, Andreas
Conti Temic microelectronic GmbH
Intellectual Property
Sieboldstraße 19
90411 Nürnberg (DE)**

(54) **CALIBRATION APPARATUS AND CALIBRATION METHOD**

(57)     The present invention provides a calibration apparatus (1) for calibrating a camera (11) with a predetermined focal length (14) and a predetermined pixel size, the calibration apparatus (1) comprising a first calibration target (2) configured to be placed in a field of view (24) of the camera (11) at a first distance (d1) from the camera (11), wherein the center (10) of the first calibration target (2) is placed at a first height (h1) and is optically marked, a second calibration target (5) configured to be placed in the field of view (24) of the camera (11) at a second distance (d2) from the camera (11) next to the first calibration target (2), wherein the second distance (d2) is smaller than the first distance (d1), wherein the second calibration target (5) comprises a reference height mark (6) at a reference height (7) and a number of consecutive additional height marks (8, 9), which allow determining their respective distance (17) from the reference height mark (6), and a calibration controller (12), which is configured to calculate the height of the camera (11) with respect to ground and the pitch angle (18) of the camera (11) with respect to a horizontal line (4) based on an image (15) taken by the camera (11) with the first calibration target (2) and the second calibration target (5) in view. Further, a corresponding method is disclosed.

FIG 1

EP 3 157 255 A1

**Description**

TECHNICAL FIELD

The invention relates to a method and to a calibration apparatus and to a calibration method for calibrating a camera with a predetermined focal length and a predetermined pixel size.

BACKGROUND

Although applicable to any system where a camera has to be calibrated, the present invention will be described in combination with calibration of cameras in vehicles, especially of front cameras in vehicles.

In modern vehicles a plurality of electronic systems support the driver while driving the vehicle. Especially in systems, which actively control either the lateral or the longitudinal movement of the vehicle, like lane assist systems or distance control systems, on-board cameras in the vehicle usually acquire information about the surroundings of the vehicle.

While mounting a camera in a vehicle, e.g. during production, certain mechanical tolerances will provide for a slightly varying orientation of the cameras over the range of produced vehicles.

However, if the cameras are to be used for controlling the movement of the vehicle, it is indispensable to know the exact orientation of the camera. Otherwise, it would not be possible to situate objects correctly in the view of the camera in relation to the vehicle or vice versa.

The exact orientation of a camera in a vehicle can e.g. be determined by a calibration routine, which can e.g. be performed during production of the vehicle.

However, such calibration routines are usually complex and require inputting of a plurality of distance and height values of the camera and a possible test pattern, which is presented to the camera during the calibration.

SUMMARY

Accordingly, there is a need for calibrating cameras with reduced effort.

This problem is solved with a calibration method with the features of claim 1 and with a calibration method with the features of claim 8.

Accordingly a calibration apparatus for calibrating a camera with a predetermined focal length and a predetermined pixel size comprises a first calibration target configured to be placed in a field of view of the camera at a first distance from the camera, wherein the center of the first calibration target is placed at a first height and is optically marked, a second calibration target configured to be placed in the field of view of the camera at a second distance from the camera next to the first calibration target, wherein the second distance is smaller than the first distance. I.e. the two calibration targets will appear in the camera image next to each other. The second calibration target comprises a reference height mark at a reference height and a number, i.e. one or more, of consecutive additional height marks, which allow determining their respective distance from the reference height mark. Further the calibration apparatus comprises a calibration controller, which is configured to calculate the pitch angle of the camera with respect to a horizontal line based on an image taken by the camera with the first calibration target and the second calibration target in view.

Further a calibration method for calibrating a camera with a predetermined focal length and a predetermined pixel size comprises the following steps: Providing a first calibration target in a field of view of the camera at a first distance from the camera, wherein the center of the first calibration target is placed at a first height and is optically marked, providing a second calibration target with a reference height mark at a reference height and a number of consecutive additional height marks, which allow determining their respective distance from the reference height mark, in the field of view of the camera at a second distance from the camera next to the first calibration target, wherein the second distance is smaller than the first distance, and calculating the pitch angle of the camera with respect to a horizontal line based on an image taken by the camera with the first calibration target and the second calibration target in view.

In common calibration methods it is necessary to input the height of the camera for calibration of the camera pitch angle. However, this height is often very difficult to measure exactly. The height of the camera depends for example on the load of the vehicle, mounting tolerances, tire wear, suspension fatigue, etc. Especially on high vehicles, like e.g. trucks, the height of the camera may therefore vary from one vehicle to the other and is difficult to determine exactly.

The present invention therefore provides a method, which supersedes the exact knowledge of the camera height.

The present invention is based on the idea of using two different calibration targets, wherein the height of the center of the first calibration target is known. Further the height of a reference height mark on the second calibration target and the height of the additional marks are known.

Based on the second calibration target and the known first height, the calibration controller will calculate the height of the camera and use this information to calculate the pitch angle of the camera.

The present invention permits the calculation of the camera sensor height during the calibration process. This has the advantage that there is no need to measure the camera sensor height on the production line or during service calibration. This is important especially during service calibration because the vehicle height might change during time.

Further embodiments of the present invention are subject of the further subclaims and of the following description, referring to the drawings.

In a possible embodiment, the calibration controller can be configured to calculate the height of the camera based on an image taken by the camera and the first distance and the second distance and the first height. The height of the camera can be calculated based on information which is easily determinable or known in advance. The first or second distance can e.g. be predetermined by the specific test rigs. The first height can easily be measured and then the height of the camera can be calculated without further complicated measurement.

In a possible embodiment, the calibration controller can comprise an image recognizer, which is configured to determine the center of the first calibration target and to identify based on the reference height mark and the additional height mark, which in the image of the camera is at the same height as the center of the first calibration target, on the second calibration target the projected height of the center of the first calibration target projected onto the second calibration target. The projected height refers to the point on the second calibration target, which lies on the second calibration target on line between the camera and the center of the first calibration target. Now based on the first height and the projected height, using simple geometric calculations the calibration controller can determine the height of the camera.

In a possible embodiment, the calibration controller can be configured to calculate the height of the camera by subtracting from the projected height multiplied by the first distance the first height multiplied by the second distance and dividing the result by the first distance minus the second distance. The calibration controller can determine the height of the camera with high accuracy with these simple geometric calculations. The corresponding formula could be:

$$hc = (h2*d1-h1*d2)/(d1-d2)$$

Wherein h1 is the height of the center of the first calibration target, h2 is the projected height, hc is the camera height, d1 is the first distance, and d2 is the second distance.

In a possible embodiment, the calibration controller can be configured to determine the center of the first calibration target and to calculate a third distance in pixels from the point on a camera imaging sensor, which refers to a horizontal line through the lens of the camera, to the point on the imaging sensor, which refers to the center of the first calibration target. The determination of the third distance in pixels can e.g. be performed by subtracting from the height of the camera the first height and dividing the result by the first distance. The division result can then be multiplied by the focal length of the camera divided by the pixel size of the pixels of the imaging sensor of the camera.

$$target\_distance[pix] = [(hc-h1)/d1]*focal\_length/pixel\_size.$$

Wherein target_distance[pix] is the distance on the imaging sensor in pixels of the center of the first calibration target from the point of the horizontal line through the lens of the camera, focal_length is the focal length of the camera and pixel_size is the size of the pixels of the imaging sensor.

In a possible embodiment, the calibration controller can be configured to calculate the pitch angle in pixels of the camera based on the third distance minus a fourth distance from the point on the camera imaging sensor, which refers to the optical axis of the camera, to the point on the imaging sensor, which refers to the center of the first calibration target. The following formula can e.g. be used:

$$optical\_axis\_to\_horizont[pix] = target\_distance[pix] -$$
$$target\_distance\_to\_optical\_axis[pix]$$

wherein optical_axis_to_horizont[pix] is the distance on the imaging sensor of the pixels representing the optical axis and the horizontal line through the lens of the camera. The target_distance_to_optical_axis[pix] is the fourth distance.

In a possible embodiment, the calibration controller can be configured to convert the pitch angle in pixels into a pitch angle in degrees using the arc tangent of the pitch angle in pixels multiplied by the pixel size divided by the focal length. The formula can e.g. be:

```
pitch_angle =
arctang(optical_axis_to_horizont[pix]*pixel_size/focal_length
).
```

BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:

Fig. 1    shows a schematic diagram of the calibration targets according to an embodiment of the present invention;

Fig. 2    shows a schematic diagram of an embodiment of a calibration apparatus according to an embodiment of the present invention;

Fig. 3    shows another schematic diagram of an embodiment of the calibration targets according to an embodiment of the present invention; and

Fig. 4    shows a flow diagram of an embodiment of the method according to the present invention.

In the figures like reference signs denote like elements unless stated otherwise.

DETAILED DESCRIPTION OF THE DRAWINGS

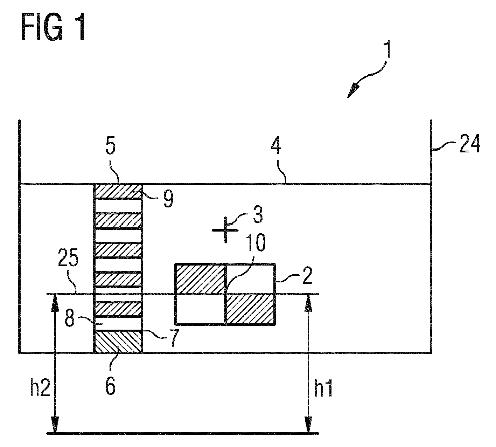

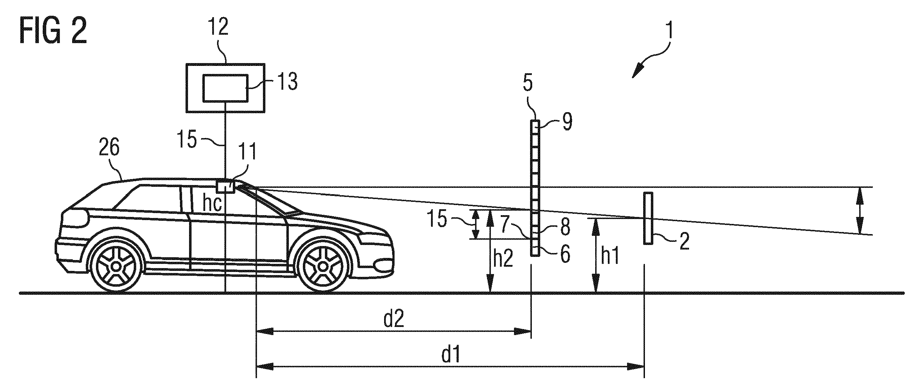

Fig. 1 shows a schematic diagram of the calibration targets 2, 5 according to an embodiment of the present invention in a front view.
The first calibration target 2 is positioned in the right half of the field of view 24 of the camera 11 (see Fig. 2). The first calibration target 2 is rectangular shaped and divided in four equally sized square sections. The upper left and the lower right section are black, while the other sections are white. This pattern serves the simple detection of the center 10 of the first calibration target 2, which is positioned at a known first height h1 from the ground.
A second calibration target 5 is placed left of the first calibration target 2. The second calibration target is higher than the first calibration target 2 and comprises a number of horizontal marks 6, 8 to 9. The first, lowest mark 6 is a reference height mark 6, whose upper (or alternatively lower or both) border is positioned at a reference height 7 from the ground. The additional height marks 8 to 9 (only the first and the last are specifically referenced) are all of the same height. These additional height marks 8 to 9 therefore allow determining their distance from the reference height mark, e.g. simply by multiplying their height with the number of the respective additional height mark 8 to 9.
Further the image center 3 is shown as a cross in the middle of the field of view 24.
A horizontal line 25 is drawn through the center 10 of the first calibration target 2. It can be seen that the line 25 crosses the third additional height mark through its center. This allows calculating the projected height h2 (see Fig. 2) of the center 10 of the first calibration target 2 on the second calibration target 5 by simply adding 2,5 times the height of the additional height marks 8 to 9 to the reference height 7.

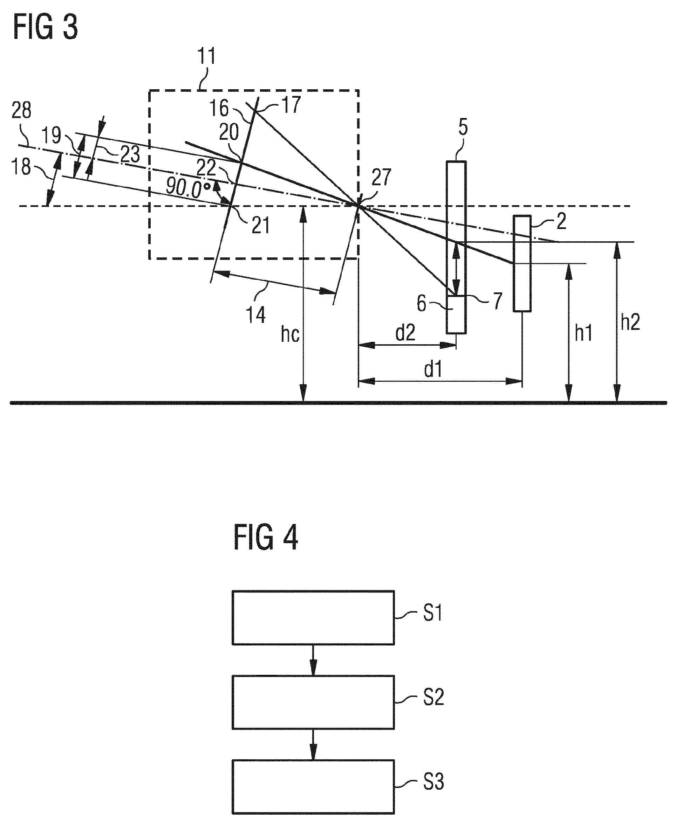

Fig. 2 will explain how this knowledge can be used to calculate the height hc of the camera 11, which is necessary for calculating the pitch angle 18 (see Fig. 3) of the camera 11.
In Fig. 2 the calibration targets 2, 5 are shown in a side view. A vehicle 26 with the camera 11 behind the wind screen is positioned in front (left) of the calibration targets 2, 5. The first calibration target 2 is placed at a distance d1 from the camera 11 and the first height h1 of the center of the first calibration target 2 is known.
The second calibration target 5 is placed at a second distance d2 from the camera 11. The second distance d2 is smaller than the first distance d1, i.e. the second calibration target 5 is positioned between the first calibration target 2 and the camera 11.
In Fig. 2 it becomes clear how the height hc of the camera 11 can easily be calculated, if the first height h1 and the projected height h2, and the distances d1, d2 are known. The projected height h2 can be calculated as explained with reference to Fig. 1.
The formula would be

$$hc = (h2*d1-h1*d2)/(d1-d2)$$

In Fig. 2 a calibration controller 12 is shown, which is coupled to the camera 11 and comprises an image recognizer 13. The calibration controller 12 and the image recognizer 13 receive an image 15 from the camera 11 and perform the necessary steps.

For example the image recognizer 13 can determine the center of the first calibration target 2 and can further determine the projection height h2 by using the respective image recognition functions.

The calibration controller 12 and the image recognizer 13 can e.g. be implemented in a separate test unit. Alternatively, the calibration controller 12 and the image recognizer 13 can also be implemented in

Fig. 3 shows another schematic diagram of the calibration targets 2, 5 which serves to explain how the pitch angle 18 can be calculated based in the height hc of the camera 11. The necessary calculations can all be performed in the measure of pixels of the imaging sensor 16 of the camera 11.

First a third distance 19 is calculated. The third distance 19 refers to the distance from the point 21 on a camera imaging sensor 16, which refers to a horizontal line 4 through the focal point 27 of the camera 11, to the point 20 on the imaging sensor 16, which refers to the center 10 of the first calibration target 2. The center 10 of the first calibration target 2 in an image can e.g. be determined by the image recognizer 13 (see Fig. 2).

The calibration controller 12 can then calculate the pitch angle 18 in pixels based on the third distance 19 minus a fourth distance 23 from the point 22 on the camera imaging sensor 16, which refers to the optical axis 28 of the camera 11, to the point 20 on the imaging sensor 16, which refers to the center 10 of the first calibration target 2.

```
optical_axis_to_horizont[pix] = target_distance[pix] -

                target_distance_to_optical_axis[pix]
```

Finally, the pitch angle 18 in pixels can be converted into a pitch angle 18 in degrees using the arc tangent of the pitch angle 18 in pixels multiplied by the pixel size divided by the focal length 14.

```
pitch_angle = arctang(optical_axis_to_horizont[pix]*

            pixel_size/focal_length).
```

The pitch angle 18 can then e.g. be stored in a controller of the camera 11 or in another control unit of the vehicle 26.

Fig. 4 shows a flow diagram of an embodiment of the method for calibrating a camera 11 with a predetermined focal length 14 and a predetermined pixel size.

The method comprises providing S1 a first calibration target 2 in a field of view 24 of the camera 11 at a first distance d1 from the camera 11. The center 10 of the first calibration target 2 is placed at a first height h1 and is optically marked.

Further, a second calibration target 5 is provided S2, which comprises a reference height mark 6 at a reference height 7 and a number of consecutive additional height marks 8, 9, which allow determining their respective distance 17 from the reference height mark 6. The second calibration target 5 is provided in the field of view 24 of the camera 11 at a second distance d2 from the camera 11 next to the first calibration target 2, wherein the second distance d2 is smaller than the first distance d1. Finally, the pitch angle 18 of the camera 11 is calculated S3 with respect to a horizontal line 4 based on an image 15 taken by the camera 11 with the first calibration target 2 and the second calibration target 5 in view.

The height hc of the camera 11 can e.g. be calculated based on an image 15 taken by the camera 11, the first distance d1, the second distance d2 and the first height h1.

For example the center 10 of the first calibration target 2 can be determined and based on the reference height mark 6 and the additional height mark 8, 9, which in the image 15 of the camera 11 is at the same height as the center 10 of the first calibration target 2, on the second calibration target 5 the projected height h2 of the center 10 of the first calibration target 2 projected onto the second calibration target 5 can be determined.

The height hc of the camera 11 can be calculated by subtracting from the projected height h2 multiplied by the first distance d1 the first height h1 multiplied by the second distance d2 and dividing the result by the first distance d1 minus the second distance d2.

Further, knowing the height hc of the camera 11 the center 10 of the first calibration target 2 can be determined and a third distance 19 in pixels can be calculated from the point 21 on a camera imaging sensor 16, which refers to a horizontal line 4 through the focal point 27 of the camera 11, to the point 20 on the imaging sensor 16, which refers to the center 10 of the first calibration target 2.

Finally, the pitch angle 18 in pixels of the camera 11 can be calculated based on the third distance 19 minus a fourth distance 23 from the point 22 on the camera imaging sensor 16, which refers to the optical axis 28 of the camera 11, to the point 21 on the imaging sensor 16, which refers to the center 10 of the first calibration target 2.

The pitch angle 18 in pixels can then be converted into a pitch angle 18 in degrees using the arc tangent of the pitch angle 18 in pixels multiplied by the pixel size divided by the focal length 14.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In the foregoing detailed description, various features are grouped together in one or more examples or examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects.

List of reference signs

|       |                                      |
|-------|--------------------------------------|
| 1     | calibration apparatus                |
| 2     | first calibration target             |
| 3     | image center                         |
| 4     | horizontal line                      |
| 5     | second calibration target            |
| 6     | reference height mark                |
| 7     | reference height                     |
| 8, 9  | additional height marks              |
| 10    | center                               |
| 11    | camera                               |
| 12    | calibration controller               |
| 13    | image recognizer                     |
| 14    | focal length                         |
| 15    | image                                |
| 16    | imaging sensor                       |
| 17    | distance from the reference height mark |
| 18    | pitch angle                          |
| 19    | third distance in pixels             |
| 20, 21, 22 | point                           |
| 23    | fourth distance                      |

| 24 | field of view |
|----|---------------|
| 25 | line |
| 26 | vehicle |
| 27 | focal point |
| 28 | optical axis |
| h1 | first height |
| h2 | projected height |
| hc | height of the camera |
| d1 | first distance |
| d2 | second distance |

**Claims**

1. Calibration apparatus (1) for calibrating a camera (11) with a predetermined focal length (14) and a predetermined pixel size, the calibration apparatus (1) comprising:

   a first calibration target (2) configured to be placed in a field of view (24) of the camera (11) at a first distance (d1) from the camera (11), wherein the center (10) of the first calibration target (2) is placed at a first height (h1) and is optically marked,
   a second calibration target (5) configured to be placed in the field of view (24) of the camera (11) at a second distance (d2) from the camera (11) next to the first calibration target (2), wherein the second distance (d2) is smaller than the first distance (d1),
   wherein the second calibration target (5) comprises a reference height mark (6) at a reference height (7) and a number of consecutive additional height marks (8, 9), which allow determining their respective distance (17) from the reference height mark (6), and
   a calibration controller (12), which is configured to calculate the pitch angle (18) of the camera (11) with respect to a horizontal line (4) based on an image (15) taken by the camera (11) with the first calibration target (2) and the second calibration target (5) in view.

2. Calibration apparatus (1) according to claim 1, wherein the calibration controller (12) is configured to calculate the height (hc) of the camera (11) based on an image (15) taken by the camera (11) and the first distance (d1) and the second distance (d2) and the first height (h1).

3. Calibration apparatus (1) according to claim 2, wherein the calibration controller (12) comprises an image recognizer (13), which is configured to determine the center (10) of the first calibration target (2) and to identify based on the reference height mark (6) and the additional height mark (8, 9), which in the image (15) of the camera (11) is at the same height as the center (10) of the first calibration target (2), on the second calibration target (5) the projected height (h2) of the center (10) of the first calibration target (2) projected onto the second calibration target (5).

4. Calibration apparatus (1) according to claim 3, wherein the calibration controller (12) is configured to calculate the height (hc) of the camera (11) by subtracting from the projected height (h2) multiplied by the first distance (d1) the first height (h1) multiplied by the second distance (d2) and dividing the result by the first distance (d1) minus the second distance (d2).

5. Calibration apparatus (1) according to any one of the preceding claims, wherein the calibration controller (12) is configured to determine the center (10) of the first calibration target (2) and to calculate a third distance (19) in pixels from the point (21) on a camera imaging sensor (16) of the camera (11), which refers to a horizontal line (4) through the focal point (27) of the camera (11), to the point (20) on the imaging sensor (16), which refers to the center (10) of the first calibration target (2).

6. Calibration apparatus (1) according to any one of the preceding claims, wherein the calibration controller (12) is configured to calculate the pitch angle (18) in pixels of the camera (11) based on the third distance (19) minus a fourth distance (23) from the point (22) on the camera imaging sensor (16), which refers to the optical axis (28) of the camera (11), to the point (20) on the imaging sensor (16), which refers to the center (10) of the first calibration target (2).

7. Calibration apparatus (1) according to claim 6, wherein the calibration controller (12) is configured to convert the pitch angle (18) in pixels into a pitch angle (18) in degrees using the arc tangent of the pitch angle (18) in pixels multiplied by the pixel size divided by the focal length (14).

8. Calibration method for calibrating a camera (11) with a predetermined focal length (14) and a predetermined pixel size, the calibration method comprising the following steps:

   providing (S1) a first calibration target (2) in a field of view (24) of the camera (11) at a first distance (d1) from the camera (11), wherein the center (10) of the first calibration target (2) is placed at a first height (h1) and is optically marked,
   providing (S2) a second calibration target (5) with a reference height mark (6) at a reference height (7) and a number of consecutive additional height marks (8, 9), which allow determining their respective distance (17) from the reference height mark (6), in the field of view (24) of the camera (11) at a second distance (d2) from the camera (11) next to the first calibration target (2), wherein the second distance (d2) is smaller than the first distance (d1), and calculating (S3) the pitch angle (18) of the camera (11) with respect to a horizontal line (4) based on an image (15) taken by the camera (11) with the first calibration target (2) and the second calibration target (5) in view.

9. Calibration method according to claim 8, wherein the height (hc) of the camera (11) is calculated based on an image (15) taken by the camera (11) and the first distance (d1) and the second distance (d2) and the first height (h1).

10. Calibration method according to claim 9, comprising determining the center (10) of the first calibration target (2) and identifying based on the reference height mark (6) and the additional height mark (8, 9), which in the image (15) of the camera (11) is at the same height as the center (10) of the first calibration target (2), on the second calibration target (5) the projected height (h2) of the center (10) of the first calibration target (2) projected onto the second calibration target (5).

11. Calibration method according to claim 10, wherein the height (hc) of the camera (11) is calculated by subtracting from the projected height (h2) multiplied by the first distance (d1) the first height (h1) multiplied by the second distance (d2) and dividing the result by the first distance (d1) minus the second distance (d2).

12. Calibration method according to any one of the preceding claims 8 to 11, comprising determining the center (10) of the first calibration target (2) and calculating a third distance (19) in pixels from the point (21) on a camera imaging sensor (16), which refers to a horizontal line (4) through the focal point (27) of the camera (11), to the point (20) on the imaging sensor (16), which refers to the center (10) of the first calibration target (2).

13. Calibration method according to any one of the preceding claims 8 to 12, wherein the pitch angle (18) in pixels of the camera (11) is calculated based on the third distance (19) minus a fourth distance (23) from the point (22) on the camera imaging sensor (16), which refers to the optical axis (28) of the camera (11), to the point (21) on the imaging sensor (16), which refers to the center (10) of the first calibration target (2).

14. Calibration method according to claim 13, wherein the pitch angle (18) in pixels is converted into a pitch angle (18) in degrees using the arc tangent of the pitch angle (18) in pixels multiplied by the pixel size divided by the focal length (14).

FIG 1

FIG 2

EP 3 157 255 A1

FIG 3

FIG 4

Europäisches
Patentamt

European
Patent Office

Office européen
des brevets

## EUROPEAN SEARCH REPORT

Application Number

EP 16 46 5512

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2008 209354 A (TOYOTA MOTOR CORP) 11 September 2008 (2008-09-11) * paragraphs [0055] - [0087]; figures 1-8 * | 1-14 | INV. H04N17/00 |
| | ----- | | |
| A | CN 105 539 311 A (SHENZHEN MEIHAO XINGFU LIFE SAFETY SYSTEMS CO LTD) 4 May 2016 (2016-05-04) * paragraphs [0025] - [0047]; figures 1,2 * | 1-14 | |
| | ----- | | |

TECHNICAL FIELDS
SEARCHED      (IPC)

H04N
B60R
G06T

The present search report has been drawn up for all claims

| Place of search | Date of completion of the search | Examiner |
|---|---|---|
| Munich | 1 September 2016 | Schinnerl, Arnold |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                EP 16 46 5512

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2016

| Patent document cited in search report | | Publication date | Patent family member(s) | Publication date |
|---|---|---|---|---|
| JP 2008209354 | A | 11-09-2008 | NONE | |
| CN 105539311 | A | 04-05-2016 | NONE | |

EPO FORM P0459

For more details about this annex : see Official Journal of the European Patent Office, No. 12/82